# FASCICULE DE BREVET EUROPEEN

(11) **EP 2 711 619 B1**
(45) Date de publication et mention de la délivrance du brevet: **13.01.2016**
(21) Numéro de dépôt: 13184440.9
(22) Date de dépôt: 13.09.2013
(51) Int. Cl.: F21V 13/10, B60Q 3/02, B60Q 3/00, G02B 27/22, F21S 8/10, F21Y 105/00

(54) **Dispositif lumineux avec effet 3D pour véhicule automobile**
Leuchtvorrichtung mit 3D-Effekt für Kraftfahrzeug
Luminous device with 3-D effect for motor vehicle

(30) Priorité: 21.09.2012 FR 1258900
(43) Date de publication de la demande: 26.03.2014
(73) Titulaire: VALEO VISION, 93012 Bobigny Cedex (FR)
(72) Inventeur: Dubosc, Christophe, 93250 VILLEMOMBLE (FR); Tassy, Pierre-Louis, 92600 ASNIERES SUR SEINE (FR)

(56) Documents cités:
- EP-A1- 2 336 632
- JP-U- 63 068 688
- US-A- 2 286 247
- US-A1- 2002 191 387
- US-A1- 2009 229 153

## Description

L'invention a trait à un module lumineux, notamment pour véhicule automobile. Plus particulièrement l'invention a trait à un module d'éclairage intérieur du véhicule, tel qu'un plafonnier ou une applique latérale, ou bien à un module de signalisation du type « position » (ou « lanterne ») et/ou du type feux "stop" pour véhicule. Plus particulièrement encore, l'invention a trait à un dispositif de signalisation générant un effet de profondeur en trois dimensions grâce à un dispositif optique particulier. L'invention a trait également à un dispositif de signalisation comprenant un tel module.

Le document EP 2 336 632 A1 décrit un dispositif de signalisation lumineuse avec effet de profondeur en trois dimension comportant un réflecteur et un écran semi-réfléchissant.

Le document de brevet EP 1 916 471 A1 décrit un feu arrière du type "lanterne" comprenant une cavité formée par un réflecteur et un écran disposé à distance du réflecteur. L'écran a la particularité d'être semi-transparent, c'est-à-dire qu'une partie des rayons lumineux le rencontrant est réfléchie et une autre partie est transmise.

La cavité présente la particularité que l'une des surfaces du réflecteur et de l'écran qui délimitent la cavité est bombée. Une série de sources lumineuses du type diode électroluminescence est disposée à la périphérie du réflecteur et orientée de sorte à émettre la lumière généralement vers l'écran. Etant donné la nature semi-transparente de celui-ci, une partie des rayons lumineux est directement transmise et une partie est réfléchie vers le réflecteur. Ce dernier réfléchit alors ces rayons vers l'écran avec un décalage dirigé vers le centre du réflecteur. Ces rayons réfléchis par le réflecteur rencontrent à nouveau l'écran. Similairement aux rayons lumineux provenant directement des sources lumineuses, une partie des rayons est transmise par l'écran et une partie est réfléchie vers le réflecteur et ainsi de suite. Il résulte de ces multiples transmissions partielles et réflexions partielles un effet optique de profondeur en trois dimensions. La puissance d'éclairage ou d'illumination des rayons lumineux émis décroit progressivement au fur et à mesure des réflexions dans la cavité. Cet effet optique est intéressant car il permet une personnalisation de la "lanterne" attirant l'attention des autres automobilistes.

Il permet également la dissimulation de la "lanterne" dans un élément de carrosserie, tel qu'un pare-choc ou une aile de véhicule automobile. Il permet également la réalisation d'un dispositif de signalisation de faible épaisseur et de faible encombrement au regard de l'effet de profondeur généré. En effet, la nature semi-transparente de l'écran est obtenue par l'application d'un recouvrement métallique qui peut lui donner un aspect métallisé similaire à celui d'un élément de carrosserie. L'image formée par ce feu arrière présente cependant des portions non lumineuses. En effet, les zones de transition entre les images se répétant ne sont pas éclairées. D'un point de vue photométrique, cela signifie qu'une partie non négligeable de la surface extérieure du feu ne participe pas à la signalisation, ce qui peut dans certains cas conduire à des difficultés d'homologation, notamment pour une fonction "stop". De plus, d'un point de vue style et aptitude à capter l'attention des autres usagers de la route, il peut être désirable de prévoir des images moins saccadées d'un point de vue intensité lumineuse.

L'invention a pour objectif de proposer un module lumineux palliant au moins un des inconvénients sus mentionnés. Plus particulièrement, l'invention a pour objectif de proposer un module lumineux apte à générer une image lumineuse améliorée notamment d'un point de vue photométrie et/ou style.

L'invention a pour objet un module de signalisation lumineuse ou d'éclairage intérieur, notamment pour véhicules automobiles, comprenant: un réflecteur avec une surface réfléchissante; un écran disposé en face du réflecteur, l'écran comprenant une zone semi-réfléchissante ; des moyens rayonnants aptes à envoyer des rayons lumineux entre le réflecteur et l'écran, certains desdits rayons étant transmis directement à travers la zone semi-réfléchissante, d'autres desdits rayons étant réfléchis par la zone semi-réfléchissante vers le réflecteur qui les renvoie à nouveau vers la zone semi-réfléchissante, de manière à générer un effet visuel répétitif de profondeur ; remarquable en ce que les moyens rayonnants comprennent au moins un dispositif d'émission de lumière comprenant une face d'émission de rayons lumineux, s'étendant depuis la zone semi-réfléchissante de l'écran jusqu'au réflecteur.

Selon un mode avantageux de l'invention, le dispositif d'émission de lumière comprend un guide de lumière comprenant une face de sortie correspondant à la face d'émission de lumière, ledit guide étant apte à être parcouru par des rayons lumineux et à les transmettre au travers de la face de sortie.

Selon un exemple de réalisation de l'invention, une source lumineuse est disposée à une extrémité du guide. Il peut s'agir par exemple d'une ou plusieurs lampes à incandescence ou encore d'une ou plusieurs diodes à électroluminescence. Une partie importante des rayons lumineux émis par la source lumineuse traverse la face d'entrée du guide de lumière, disposée en face de la source lumineuse. Les diodes à électroluminescence permettent une réalisation plus simple du dispositif.

Selon un exemple d'agencement du guide et de la source de lumière, les rayons lumineux peuvent alors se propager dans la matière transparente du guide, par réflexions internes successives sur les parois du guide, notamment suivant des directions majoritairement orientées selon l'axe longitudinal du guide, les rayons se propageant alors dans le guide, notamment le long du guide.Le guide de lumière peut comprendre des moyens de découplage, tels que des facettes de réflexion sur sa face arrière, opposée à la face de sortie des rayons. Ces moyens de découplage sont configurés pour assurer une réflexion d'une partie des rayons évoluant le long du guide, vers la face de sortie de manière à les faire sortir du guide.

Selon un mode avantageux de l'invention, le dispositif d'émission de lumière comprend une source surfacique de lumière, notamment une diode électroluminescente organique (OLED), comprenant une surface, notamment la surface lumineuse dans le cadre d'une diode électroluminescente organique (OLED), correspondant à la face d'émission de lumière.

Selon un mode avantageux de l'invention, les rayons lumineux sortant du dispositif d'émission de lumière au travers de la face d'émission sont répartis essentiellement sur la totalité de la surface de ladite face située entre le réflecteur et la zone semi-réfléchissante de l'écran.

Selon un mode avantageux de l'invention, le dispositif d'émission de lumière s'étend longitudinalement le long de l'écran et du réflecteur.

Selon un mode avantageux de l'invention, le dispositif d'émission de lumière s'étend transversalement depuis la zone semi-réfléchissante de l'écran jusqu'au réflecteur.

Selon un mode de réalisation de l'invention, la face d'émission du ou des dispositifs d'émission de lumière est inclinée vers la ladite zone semi-réfléchissante.

Selon un mode de réalisation de l'invention, la face d'émission du ou des dispositifs d'émission de lumière est inclinée vers le réflecteur.

Selon un mode avantageux de l'invention, la face d'émission du ou d'au moins un des dispositifs d'émission de lumière est disposée le long d'un bord du réflecteur et/ou de la zone semi-réfléchissante de l'écran.

Selon un mode avantageux de l'invention, le bord du réflecteur est en retrait par rapport au bord correspondant de la zone semi-réfléchissante de l'écran, de manière à ce que la face d'émission du ou d'au moins un des dispositifs d'émission de lumière, disposée le long desdits bords, soit inclinée vers ladite zone semi-réfléchissante.

Selon un mode avantageux de l'invention, le bord de la zone semi-réfléchissante est en retrait par rapport au bord correspondant de l'écran du réflecteur, de manière à ce que la face d'émission du ou d'au moins un des dispositifs d'émission de lumière, disposée le long desdits bords, soit inclinée vers ledit réflecteur.

Selon un mode avantageux de l'invention, la face d'émission forme un angle moyen avec la zone semi-réfléchissante de l'écran compris entre 30° et 60°.

Selon un mode avantageux de l'invention, l'écran est généralement plan et la surface réfléchissante est généralement convexe ou concave.

Selon un mode avantageux de l'invention, la face d'émission du ou d'au moins un des dispositifs d'émission de lumière forme une surface diffusante, par exemple une surface grainée, obtenue notamment par grainage ou par sablage. La surface diffusante peut également être une surface obtenue par dépôt d'un vernis diffusant sur la surface destinée à diffuser.

Selon un mode avantageux de l'invention, les propriétés diffusantes de la face d'émission sont essentiellement constantes sur la totalité de la face.

Selon un mode avantageux de l'invention, le ou au moins un des dispositifs d'émission de lumière comprend une face arrière opposée à la face de sortie, comprenant des surfaces de réflexion des rayons lumineux vers la face d'émission, ladite face arrière étant plus large que la face d'émission.

Selon un mode avantageux de l'invention, le ou au moins un des dispositifs d'émission de lumière présente sur la majorité de sa longueur une section transversale en forme de trapèze, la face d'émission correspondant à la plus petite des deux bases du trapèze.

Selon un mode avantageux de l'invention, la section trapézoïdale du ou des dispositifs d'émission de lumière varie le long dudit ou desdits guides en fonction de l'espace disponible entre le réflecteur et la zone semi-réfléchissante de l'écran.

Module d'éclairage intérieur d'un véhicule, notamment de l'habitacle du véhicule, tel qu'un plafonnier ou une applique latérale, **caractérisé en ce qu'il** est conforme à l'invention.

L'invention a également pour objet un dispositif lumineux notamment d'éclairage intérieur pour véhicule automobile comprenant un module selon l'invention.

L'invention a également pour objet un dispositif de signalisation pour véhicule automobile comprenant un module selon l'invention.

Les caractéristiques de l'invention sont avantageuses en ce qu'elles permettent de réaliser un module lumineux avec effet de profondeur, qui soit particulièrement performant d'un point de vue luminosité et style.

D'autres caractéristiques et avantages de la présente invention seront mieux compris à l'aide de la description et des dessins parmi lesquels :
- la figure 1 est une illustration en perspective d'un module lumineux conforme à l'invention ;
- la figure 2 est une vue en coupe selon l'axe II-II du module de la figure 1, illustrant le principe général de la génération d'image avec effet de profondeur;
- la figure 3 est un agrandissement de la portion gauche de la figure 2, illustrant un premier aspect de la construction de l'image lumineuse ;
- la figure 4 est, similairement à la figure 3, un agrandissement de la portion gauche de la figure 2, illustrant un deuxième aspect de la construction de l'image lumineuse.

L'exemple de réalisation de l'invention illustré aux figures est volontairement simplifié et schématique à des fin de clarté d'exposé de l'invention. En pratique, les différents éléments constitutifs de l'invention pourront prendre des formes sensiblement plus complexes notamment en raison de différentes contraintes liées au dimensionnement.

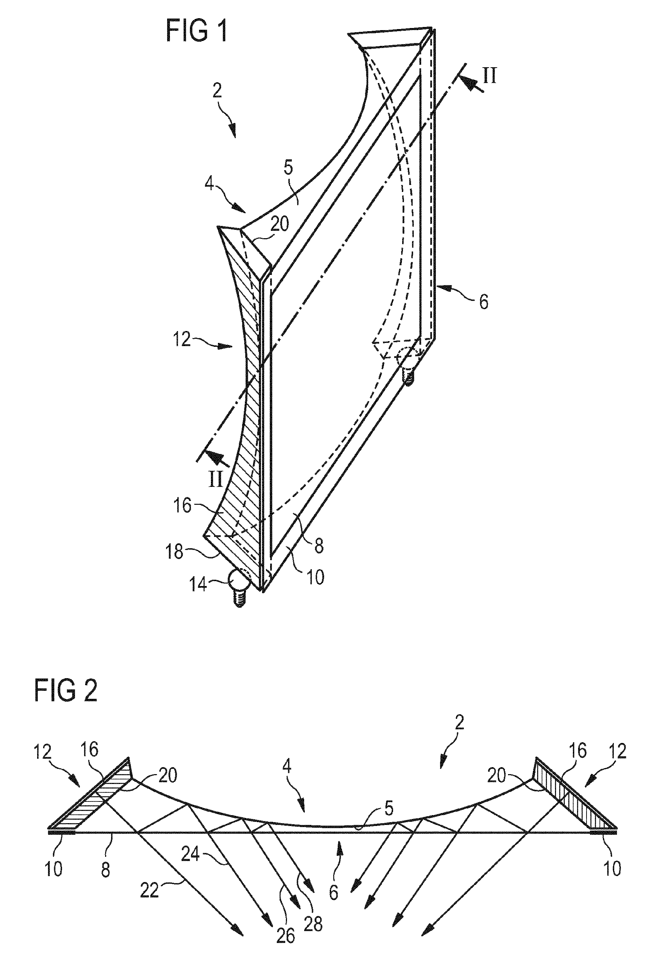

Le module lumineux 2 illustré à la figure 1 comprend essentiellement un réflecteur 4 avec une surface réfléchissante 5 et un écran 6 s'étendant en face de la surface réfléchissante 5. L'écran comprend une zone semi-réfléchissante 8 entourée d'un masque 10. L'écran est généralement plan et la surface réfléchissante 5 est généralement convexe. L'écran 6 et le réflecteur 4 forment un quadrilatère dont deux bords opposés sont pourvus, chacun, d'un dispositif d'émission de lumière 12. Ce dernier s'étend longitudinalement le long des bords correspondants ou en vis-à-vis de la zone semi-transparente 8 et de la surface réfléchissante 5. Le dispositif d'émission de lumière s'étend également transversalement depuis le bord de la surface réfléchissante 5 jusqu'au bord de la zone semi-transparente 8, de manière à couvrir essentiellement totalement l'espace entre ces deux bords.

D'une manière générale dans l'ensemble de l'invention, l'écran 6 peut être réalisé avec un matériau transparent couramment utilisé comme par exemple certains plastiques ou du verre. Une des ses surfaces, la surface externe ou interne, est rendue semi-transparente par application d'un revêtement typiquement partiellement réfléchissant. Le revêtement est habituellement un revêtement métallique comme de l'aluminium ou un métal inoxydable appliqué par technique de déposition en phase vapeur et sous vide. Diverses méthodes d'application du revêtement connues de l'homme de métier peuvent être utilisées. Lorsque le taux de réflexion augmente, on peut obtenir plus de répétitions des motifs. Le taux de réflexion du revêtement est préférentiellement supérieur à 15%, préférentiellement supérieur à 50%. Lorsque le taux de réflexion diminue, on peut obtenir plus de luminosité. Préférentiellement, le taux de réflexion est inférieur à 95%. Avec un taux de réflexion inférieur à 80%, on obtient une luminosité meilleure, par exemple pour une fonction de signalisation. Pour les fonctions utilisées selon l'invention, notamment d'éclairage intérieur ou de signalisation, le taux de réflexion peut être compris entre 15 et 80%, préférentiellement entre 50% et 80%. Dans le cadre de fonctions de signalisation, le taux de réflexion est préférentiellement compris entre 70 et 80%, préférentiellement environ 75%.

Les dispositifs d'émission de lumière 12 peuvent être des guides de lumière. Une source lumineuse 14 est disposée à une des extrémités de chacun des deux guides 12. Il peut s'agir par exemple d'une ou plusieurs lampes à incandescence ou encore d'une ou plusieurs diodes à électroluminescence. Une partie importante des rayons lumineux émis par la source lumineuse 14 traverse la face d'entrée 18 du guide de lumière 12, disposée en face de la source lumineuse 14. Les rayons lumineux peuvent alors se propager dans la matière transparente du guide, par réflexion interne sur les parois du guide suivant des directions majoritairement orientées selon l'axe longitudinale du guide. Les rayons rencontrant le dioptre formé par la surface extérieure du guide et l'air extérieur ambiant sont réfléchis pour autant qu'ils soient incidents selon un angle supérieur à l'angle limite de réfraction, suivant le principe de réflexion totale. La surface du guide forme en effet un dioptre entre le matériau du guide d'un indice de réfraction donné (typiquement de l'ordre de 1.6 pour du polycarbonate) et l'air ambiant d'un indice de réfraction différent (égale à 1). Cette différence d'indice de réfraction de deux milieux contigus a pour conséquence qu'il existe un angle d'incidence limite au delà duquel la réfraction est impossible et pour lequel il y a réflexion totale. Dans le cas d'un milieu en polycarbonate entouré d'air, cet angle limite est de l'ordre de 38° (selon la loi de Snell-Descartes). Les rayons lumineux peuvent ainsi évoluer essentiellement longitudinalement par réflexion successives sur des faces opposées du guide. Le guide de lumière 12 comprend des facettes de réflexion 16 sur sa face arrière, opposée à la face de sortie des rayons 20. Ces facettes sont configurées pour assurer une réflexion d'une partie des rayons évoluant le long du guide, vers la face de sortie 20 de manière à les faire sortir du guide. Elles peuvent être recouvertes d'un revêtement réfléchissant. Ce type de facettes est bien connu en soi de l'homme de métier, si bien qu'une description plus détaillée n'est pas nécessaire. Chacun de deux guides 12 est ainsi configuré pour que les rayons lumineux émis par la ou les sources lumineuses respectives se propagent longitudinalement dans le guide et sortent progressivement latéralement au travers de la face de sortie.

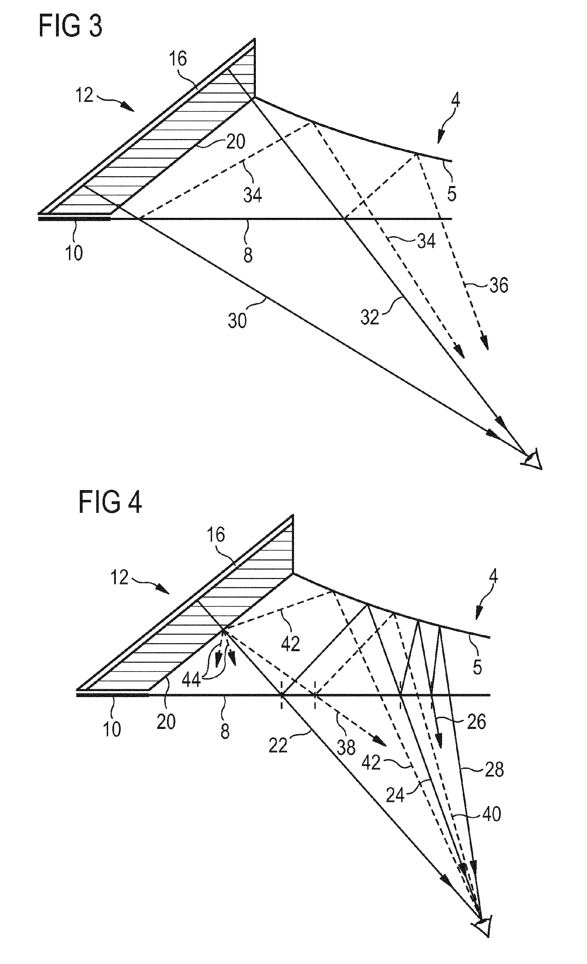

La figure 2 qui est une vue en coupe selon l'axe II-II du module de la figure 1, illustre le principe général de la génération d'image avec effet de profondeur ou encore à trois dimensions. En effet, un rayon 22 se propageant le long du guide et réfléchi par une des facettes 16 est représenté. Il sort de la face de sortie 20 pour rencontrer la zone semi-réfléchissante 8 de l'écran 6. Le rayon va alors partiellement traverser l'écran et partiellement être réfléchi vers la surface réfléchissante 5. Cette dernière va alors réfléchir (essentiellement totalement) ce rayon vers l'écran. Le rayon ainsi réfléchi 24 va, similairement au rayon initial 22, partiellement traverser l'écran et partiellement être réfléchi vers la surface réfléchissante 5. La partie réfléchie du rayon 24 va être réfléchie par la surface réfléchissante 5 pour former le rayon 26 qui va partiellement traverser l'écran et partiellement être réfléchi pour ensuite former le rayon 28 et ainsi de suite. Un observateur regardant la surface extérieure de l'écran 6 va alors percevoir une succession d'images des facettes de réflexion 16, c'est-à-dire essentiellement des traits verticaux avec des stries transversales, la largeur et l'intensité des traits verticaux diminuant progressivement depuis l'image directe formée notamment par le rayon 22 vers les images réfléchies et potentiellement déformées par la surface réfléchissante convexe 5, ces images étant formées notamment par les rayons 24, 26 et 28. La figure 2 illustre un seul rayon sortant de la face de sortie, étant toutefois entendu qu'une multitude de rayons sortent de ladite face, et ce suivant différentes directions, formant ainsi des images essentiellement complètes de la facette 16 située au niveau de la coupe, ces images étant alors visibles suivant différents angles d'observation. La face de sortie 20 du guide de lumière s'étendant depuis le bord de la surface réfléchissante 5 jusqu'au bord correspondant de la zone semi-réfléchissante 8 permet de minimiser, voire d'annuler les zones non éclairées entre les images successives des facettes 16, comme cela va être détaillé en relation avec la figure 3. La partie droite de la figure 2 est essentiellement symétrique par rapport à la partie gauche, le même phénomène y est donc visible.

La figure 3 est un agrandissement de la portion gauche de la figure 2, illustrant un premier aspect de la construction de l'image lumineuse. Un premier rayon 30 sortant de l'extrémité de la face de sortie 20, adjacente à la zone semi-transparente 8, est représenté. Il est dirigé vers un observateur schématisé par un point de vue. Un deuxième rayon 32 sortant de l'autre extrémité de la face de sortie 20, adjacente à la surface réfléchissante 5 et dirigé vers l'observateur est également représenté. Ces rayons ne sont bien sûr qu'une partie des rayons réfléchis par la ou les facettes 16 à cette hauteur du guide de lumière. L'observateur perçoit ainsi une image non ou peu déformée de la ou des facettes 16. Le premier rayon 30, lorsqu'il rencontre la zone semi-réfléchissante 8, est partiellement réfléchi en un rayon 34 vers la surface réfléchissante 5. Ce dernier y est ensuite à nouveau réfléchi et traverse partiellement la zone semi-réfléchissante 8 pour parvenir à l'oeil de l'observateur. Il en va de même pour le deuxième rayon 32 qui se voit partiellement réfléchi par la zone semi-transparente 8 en un rayon 36 qui parvient également à l'oeil de l'observateur. Ce dernier perçoit ainsi deux images, à savoir une première image des facettes de réflexion 16 par transmission suivant notamment les rayons 30 et 32, et une deuxième image desdites facettes, cette image étant inversée par une double réflexion sur la zone semi-transparente et la surface réfléchissante et formée notamment par les rayons 34 et 36. On peut observer que la distance entre ces deux images est réduite, ce qui permet d'atteindre un style et une photométrie améliorés. Selon la géométrie du module et également la position de l'observateur, la distance entre ces deux images peut être nulle ou quasi-nulle. Elles peuvent également se superposer. Des images supplémentaires peuvent également être formées, similairement au principe qui vient d'être expliqué.

La figure 4 est une représentation de la portion gauche de la figure 2, similairement à la figure 3, et illustre un deuxième aspect de la construction de l'image lumineuse. En effet, la face de sortie 20 du guide de lumière peut être diffusante et ainsi former une source de lumière surfacique. A la figure 4 est représenté un rayon 22 réfléchi par la facette de réflexion 16. Au point de passage de ce rayon au travers la face de sortie 20, le rayon est transmis et réfracté dans un grand nombre de directions et l'énergie du rayon incident est ainsi redistribuée dans une multitude de rayons réfractés. A titre d'exemple, le rayon 38 rencontre la zone semi-réfléchissante 8 à un autre endroit que le rayon 22 transmis sans déviation. Il est alors partiellement transmis et partiellement réfléchi. Le rayon ainsi réfléchi vers la surface réfléchissante se voit à nouveau réfléchi pour former une deuxième image de la facette, visible par l'observateur de la première image formée par le rayon 22. Encore à titre d'exemple, le rayon 42 est un autre rayon diffusé par la face de sortie 20 à partir du point de sortie du rayon 22, ce rayon rencontrant directement la surface réfléchissante 5 et pouvant également former une image supplémentaire de la facette 16. La face de sortie va diffuser d'autres rayons tels que les rayons 44 illustrés à la figure.

La nature diffusante de la face de sortie 20 du guide de lumière permet de combler les zones non ou faiblement lumineuses entre les images successives des facettes de réflexion.

L'image ainsi produite va ressembler à des barreaux verticaux disposés les uns à côté des autres et reliés entre eux, un peu à la manière d'un escalier. Cette image présente ainsi une continuité lumineuse tout en conservant son effet de profondeur.

La nature diffusante de la face de sortie du guide de lumière peut être atteinte de diverses manières bien connues en soi de l'homme de métier, notamment par sablage, attaque acide ou encore dépôt d'un revêtement. L'aptitude diffusante de la surface est caractérisée essentiellement par sa rugosité

Dans l'exemple de réalisation qui vient d'être décrit, le module a une forme rectangulaire. Il est toutefois entendu qu'il peut prendre diverses formes notamment plus complexes et notamment avec des contours arrondis. La surface réfléchissante peut également prendre des formes plus complexes que celle illustrée dans l'exemple de réalisation. L'homme de métier ayant connaissance de la présente invention pourra aisément procéder à un dimensionnement notamment par calcul des surfaces à mettre en oeuvre pour réaliser le module.

Dans l'exemple de réalisation qui vient d'être décrit, le module comprend deux guides de lumière disposés à des bords opposés des surfaces du module. Ce dernier peut cependant ne comprendre qu'un seul guide de lumière s'étendant le long d'un seul bord ou encore s'étendant de manière continue le long de plusieurs bords. Il peut également comprendre plus de deux guides de lumière.

Il est également possible d'utiliser à la place du guide une source lumineuse surfacique, dont la surface de l'élément émetteur correspond à la face d'émission de lumière du dispositif d'émission de lumière. Cette source surfacique peut par exemple être une OLED, dans un exemple non illustré, qui par rapport à l'illustration des figures 2, 3 et 4 s'étendrait à la place du guide de lumière 12 entre le réflecteur 4 et l'écran 6.

## Revendications

1. Module lumineux, notamment pour véhicule automobile, comprenant :
- un réflecteur (4) avec une surface réfléchissante (5);
- un écran (6) disposé en face du réflecteur, l'écran comprenant une zone semi-réfléchissante (8) ;
- des moyens rayonnants (12, 14) aptes à envoyer des rayons lumineux entre le réflecteur (4) et l'écran (6), certains desdits rayons étant transmis directement à travers la zone semi-réfléchissante (8), d'autres desdits rayons étant réfléchis par la zone semi-réfléchissante (8) vers le réflecteur (4) qui les renvoie à nouveau vers la zone semi-réfléchissante (8), de manière à générer un effet visuel répétitif de profondeur ;
**caractérisé en ce que**
les moyens rayonnants comprennent au moins un dispositif d'émission de lumière (12) comprenant une face d'émission de rayons lumineux (20), s'étendant depuis la zone semi-réfléchissante (8) de l'écran (6) jusqu'au réflecteur (4).

2. Module lumineux (2) selon la revendication 1, **caractérisé en ce que** le dispositif d'émission de lumière comprend un guide de lumière comprenant une face de sortie (20) correspondant à la face d'émission de lumière, ledit guide étant apte à être parcouru par des rayons lumineux et à les transmettre au travers de ladite face de sortie (20).

3. Module lumineux (2) selon la revendication 1, **caractérisé en ce que** ledit dispositif d'émission de lumière comprend une source surfacique de lumière, notamment une diode électroluminescente organique, comprenant une surface, notamment la surface lumineuse dans le cadre d'une diode électroluminescente organique, correspondant à la face d'émission de lumière.

4. Module lumineux (2) selon l'une des revendications 1 à 3, **caractérisé en ce que** les rayons lumineux sortant du dispositif d'émission de lumière au travers de la face d'émission sont répartis essentiellement sur la totalité de la surface de ladite face située entre le réflecteur (4) et la zone semi-réfléchissante (8) de l'écran (6).

5. Module lumineux (2) selon l'une des revendications 1 à 4, **caractérisé en ce que** le dispositif d'émission de lumière s'étend longitudinalement le long de l'écran (6) et du réflecteur (4).

6. Module lumineux (2) selon l'une des revendications 1 à 5, **caractérisé en ce que** le dispositif d'émission de lumière s'étend transversalement depuis la zone semi-réfléchissante (8) de l'écran (6) jusqu'au réflecteur (4).

7. Module lumineux (2) selon l'une des revendications 1 à 6, **caractérisé en ce que** la face d'émission (20) du ou d'au moins un des dispositifs d'émission de lumière (12) est disposée le long d'un bord du réflecteur (4) et/ou de la zone semi-réfléchissante (8) de l'écran (6).

8. Module lumineux (2) selon la revendication 7, **caractérisé en ce que** le bord du réflecteur (4) est en retrait par rapport au bord correspondant de la zone semi-réfléchissante (8) de l'écran (6), de manière à ce que la face d'émission (20) du ou des dispositifs d'émission de lumière (12), disposée le long desdits bords, soit inclinée vers la ladite zone semi-réfléchissante (8).

9. Module lumineux (2) selon la revendication 8, **caractérisé en ce que** la face d'émission (20) forme un angle moyen avec la zone semi-réfléchissante (8) de l'écran (6) compris entre 30° et 60°.

10. Module lumineux (2) selon l'une des revendications 1 à 9, **caractérisé en ce que** la surface réfléchissante (5) est généralement convexe ou concave.

11. Module lumineux (2) selon l'une des revendications 1 à 10, **caractérisé en ce que** la face d'émission (20) du ou d'au moins un des dispositifs d'émission de lumière (12) forme une surface diffusante.

12. Module lumineux (2) selon l'une des revendications 1 à 11, **caractérisé en ce que** le ou au moins un des dispositifs d'émission de lumière (12) comprend une face arrière opposée à la face de sortie, comprenant des surfaces de réflexion (16) des rayons lumineux vers la face d'émission (20) et étant plus large que la face d'émission (20) .

13. Module lumineux (2) selon l'une des revendications 1 à 12, **caractérisé en ce que** le ou au moins un des dispositifs d'émission de lumière (12) présente sur la majorité de sa longueur une section transversale en forme de trapèze.

14. Module d'éclairage intérieur d'un véhicule, notamment de l'habitacle du véhicule, tel qu'un plafonnier ou une applique latérale, **caractérisé en ce qu'il** est conforme à l'une des revendications 1 à 13.

15. Dispositif de signalisation pour véhicule automobile comprenant un module lumineux (2) selon l'une des revendications 1 à 13.

## Patentansprüche

1. Lichtmodul, insbesondere für Kraftfahrzeuge, mit:
- einem Reflektor (4) mit einer reflektierenden Oberfläche (5);
- einem dem Reflektor gegenüber angeordneten Schirm (6), wobei der Schirm einen halbreflektierenden Bereich (8) aufweist;
- Strahlungsmitteln (12, 14), die zwischen dem Reflektor (4) und dem Schirm (6) Lichtstrahlen auszusenden vermögen, wobei einige der Lichtstrahlen unmittelbar durch den halbreflektierenden Bereich (8) übertragen werden, andere Lichtstrahlen durch den halbreflektierenden Bereich (8) zum Reflektor (4) reflektiert werden, der sie erneut zu dem halbreflektierenden Bereich (8) zurückstrahlt, derart, dass eine sich wiederholende visuelle Tiefenwirkung erzeugt wird;
**dadurch gekennzeichnet, dass** die Strahlungsmittel wenigstens eine Lichtemissionsvorrichtung (12) mit einer Lichtstrahlenemissionsfläche (20) umfassen, die von dem halbreflektierenden Bereich (8) des Schirms (6) bis zum Reflektor (4) verläuft.

2. Lichtmodul (2) nach Anspruch 1,
**dadurch gekennzeichnet, dass** die Lichtemissionsvorrichtung einen Lichtleiter mit einer der Lichtemissionsfläche entsprechenden Austrittsfläche (20) umfasst, wobei der Lichtleiter von Lichtstrahlen durchlaufen zu werden vermag und er diese durch die Austrittsfläche (20) weiterzuleiten vermag.

3. Lichtmodul (2) nach Anspruch 1,
**dadurch gekennzeichnet, dass** die Lichtemissionsvorrichtung eine flächige Lichtquelle, insbesondere eine organische Leuchtdiode, mit einer Oberfläche, insbesondere der Leuchtfläche bei einer organischen Leuchtdiode, umfasst, die der Lichtemissionsfläche entspricht.

4. Lichtmodul (2) nach einem der Ansprüche 1 bis 3,
**dadurch gekennzeichnet, dass** die aus der Lichtemissionsvorrichtung durch die Emissionsfläche austretenden Lichtstrahlen im Wesentlichen über die gesamte Oberfläche der zwischen dem Reflektor (4) und dem halbreflektierenden Bereich (8) liegenden Seite verteilt werden.

5. Lichtmodul (2) nach einem der Ansprüche 1 bis 4,
**dadurch gekennzeichnet, dass** die Lichtemissionsvorrichtung entlang des Schirms (6) und des Reflektors (4) verläuft.

6. Lichtmodul (2) nach einem der Ansprüche 1 bis 5,
**dadurch gekennzeichnet, dass** die Lichtemissionsvorrichtung von dem halbreflektierenden Bereich (8) des Schirms (6) quer bis zum Reflektor (4) verläuft.

7. Lichtmodul (2) nach einem der Ansprüche 1 bis 6,
**dadurch gekennzeichnet, dass** die Emissionsfläche (20) der oder wenigstens einer der Lichtemissionsvorrichtungen (12) entlang eines Rands des Reflektors (4) und/oder des halbreflektierenden Bereichs (8) des Schirms (6) angeordnet ist.

8. Lichtmodul (2) nach Anspruch 7,
**dadurch gekennzeichnet, dass** der Rand des Reflektors (4) zum entsprechenden Rand des halbreflektierenden Bereichs (8) des Schirms (6) solchermaßen versetzt ist, dass die entlang dieser Ränder angeordnete Emissionsfläche (20) der Lichtemissionsvorrichtung(en) (12) in Richtung des halbreflektierenden Bereichs (8) schräg verläuft.

9. Lichtmodul (2) nach Anspruch 8,
**dadurch gekennzeichnet, dass** die Emissionsfläche (20) mit dem halbreflektierenden Bereich (8) des Schirms (6) einen mittleren Winkel zwischen 30° und 60° bildet.

10. Lichtmodul (2) nach einem der Ansprüche 1 bis 9,
**dadurch gekennzeichnet, dass** die reflektierende Oberfläche (5) allgemein konvex oder konkav ist.

11. Lichtmodul (2) nach einem der Ansprüche 1 bis 10,
**dadurch gekennzeichnet, dass** die Emissionsfläche (20) der oder wenigstens einer der Lichtemissionsvorrichtungen (12) eine lichtstreuende Oberfläche bildet.

12. Lichtmodul (2) nach einem der Ansprüche 1 bis 11,
**dadurch gekennzeichnet, dass** die oder wenigstens eine der Lichtemissionsvorrichtungen (12) eine der Lichtaustrittsfläche entgegengesetzt angeordnete Rückseite aufweist, mit Oberflächen (16) zum Reflektieren der Lichtstrahlen zu der Emissionsfläche (20), und die breiter ist als die Emissionsfläche (20).

13. Lichtmodul (2) nach einem der Ansprüche 1 bis 12,
**dadurch gekennzeichnet, dass** die oder wenigstens eine der Lichtemissionsvorrichtungen (12) über den überwiegenden Teil ihrer Länge einen trapezförmigen Querschnitt aufweist.

14. Modul zur Innenbeleuchtung eines Fahrzeugs, insbesondere des Fahrzeuginnenraums, wie etwa eine Deckenleuchte oder eine Seitenleuchte,
**dadurch gekennzeichnet, dass** es einem der Ansprüche 1 bis 13 entspricht.

15. Signalgebungsvorrichtung für Kraftfahrzeuge mit einem Lichtmodul (2) nach einem der Ansprüche 1 bis 13.

## Claims

1. Light module, in particular for a motor vehicle, comprising:
- a reflector (4) with a reflective surface (5);
- a screen (6) disposed facing the reflector, the screen comprising a semi-reflective zone (8);
- radiating means (12, 14) able to send light rays between the reflector (4) and the screen (6), some of said rays being transmitted directly through the semi-reflective zone (8), other ones of said rays being reflected by the semi-reflective zone (8) towards the reflector (4), which once again returns them towards the semi-reflective zone (8), so as to generate a repetitive visual effect of depth;
**characterised in that**
the radiating means comprise at least one light-emission device (12) comprising a face for emitting light rays (20), extending from the semi-reflective zone (8) of the screen (6) as far as the reflector (4).

2. Light module (2) according to claim 1, **characterised in that** the light-emission device comprises a light guide comprising an output face (20) corresponding to the light-emission face, said guide being able to have the light rays pass through it and to transmit them through said output face (20).

3. Light module (2) according to claim 1, **characterised in that** said light-emission device comprises a surface light source, in particular an organic light emitting diode, comprising a surface, in particular the luminous surface in the context of an organic light emitting diode, corresponding to the light-emission face.

4. Light module (2) according to one of claims 1 to 3, **characterised in that** the light rays emerging from the light-emission device through the emission face are distributed essentially over the whole of the surface of said face situated between the reflector (4) and the semi-reflective zone (8) of the screen (6).

5. Light module (2) according to one of claims 1 to 4, **characterised in that** the light-emission device extends longitudinally along the screen (6) and reflector (4).

6. Light module (2) according to one of claims 1 to 5, **characterised in that** light-emission device extends transversely from the semi-reflective zone (8) of the screen (6) as far as the reflector (4).

7. Light module (2) according to one of claims 1 to 6, **characterised in that** the emission face (20) of the or at least one of the light-emission devices (12) is disposed along one edge of the reflector (4) and/or of the semi-reflective zone (8) of the screen (6).

8. Light module (2) according to claim 7, **characterised in that** the edge of the reflector (4) is recessed with respect to the corresponding edge of the semi-reflective zone (8) of the screen (6), so that the emission face (20) of the light-emission device or devices (12), disposed along said edges, is inclined towards said semi-reflective zone (8).

9. Light module (2) according to claim 8, **characterised in that** the emission face (20) forms a mean angle with the semi-reflective zone (8) of the screen (6) of between 30-' and 60° .

10. Light module (2) according to one of claims 1 to 9, **characterised in that** the reflective surface (5) is generally convex or concave.

11. Light module (2) according to one of claims 1 to 10, **characterised in that** the emission face (20) of the or at least one of the light-emission devices (12) forms a diffusing surface.

12. Light module (2) according to one of claims 1 to 11, **characterised in that** the or at least one of the light-emission devices (12) comprises a rear face opposite to the output face, comprising surfaces (16) for reflecting the light rays towards the emission face (20) and being wider than the emission face (20).

13. Light module (2) according to one of claims 1 to 12, **characterised in that** the or at least one of light-emission devices (12) has, over the majority of its length, a cross section in the form of a trapezium.

14. Interior lighting module of a vehicle, in particular of the vehicle passenger compartment, such as an overhead light or a side wall light, **characterised in that** it is in accordance with one of claims 1 to 13.

15. Signalling device for a motor vehicle, comprising a light module (2) according to one of claims 1 to 13.
